# EUROPÄISCHE PATENTANMELDUNG

(11) **EP 4 006 932 A1**
(43) Veröffentlichungstag der Anmeldung: **01.06.2022**
(21) Anmeldenummer: 20209854.7
(22) Anmeldetag: 25.11.2020
(51) Int. Cl.: H01F 41/16, H01F 41/02, H02K 15/02, B33Y 10/00

(54) **VERFAHREN ZUR HERSTELLUNG EINER MATERIALLAGE MIT ZUMINDEST EINER AUSSPARUNG**

(71) Anmelder: Siemens Aktiengesellschaft, 80333 München (DE)
(72) Erfinder: Schuh, Carsten, 85598 Baldham (DE); Soller, Thomas, 94469 Deggendorf (DE); Vollmer, Rolf, 36129 Gersfeld (DE)

(57) **Zusammenfassung**

Die Erfindung betrifft ein Verfahren zur Herstellung einer Materiallage (16) mit zumindest einer Aussparung (32) aus einem Grünkörper (52). Um, im Vergleich zum Stand der Technik, eine bessere Kostenposition zu erreichen, wird vorgeschlagen, dass das Herstellungsverfahren folgende Schritte umfasst: Aufbringen (34) einer ersten Suspension (36), welche zumindest ein Bindemittel enthält, durch eine erste Ausnehmung (38) einer ersten Schablone (40), Aufbringen (44) einer zweiten Suspension (46), welche ein Bindemittel und Feststoffteilchen aus einem zweiten Werkstoff enthält, durch eine zweite Ausnehmung (48) einer zweiten Schablone (50), wobei die erste Ausnehmung (38) der ersten Schablone (40) vollständig in der zweiten Ausnehmung (48) der zweiten Schablone (50) enthalten ist, sodass die zweite Suspension (46) die erste Suspension (36) vollständig umgibt, Sintern (54) des die Suspensionen (36, 46) enthaltenden Grünkörpers (52), wobei durch den Sintervorgang die erste Suspension (36) verflüchtigt wird und ein dauerhafter Zusammenhalt der Feststoffteilchen der zweiten Suspension (46) geschaffen wird.

## Beschreibung

Die Erfindung betrifft ein Verfahren zur Herstellung einer Materiallage mit zumindest einer Aussparung aus einem Grünkörper.

Die Erfindung betrifft ferner ein Verfahren zur Herstellung eines Materiallagengefüges für einen Rotor oder einen Stator einer elektrischen rotierenden Maschine.

In elektrischen rotierenden Maschinen kommen üblicherweise Blechpakete aus gestapelten Elektroblechen zum Einsatz, um eine Ausbreitung von Wirbelströmen zu unterdrücken. Derartige elektrische rotierende Maschinen sind beispielsweise Motoren und Generatoren. Die Elektrobleche, welche beispielsweise einen weichmagnetischen Werkstoff, insbesondere Eisen, enthalten, werden üblicherweise aus gewalzten Großblechen herausgeschnitten beziehungsweise gestanzt. Anschließend werden die Bleche zu einem Blechpaket paketiert. Durch ein derartiges konventionelles Herstellungsverfahren sind derzeit großtechnisch keine Bleche herstellbar, die eine Lagendicke von kleiner 100 µm aufweisen. Zudem fällt beim Herausschneiden bzw. Stanzen der Bleche aus den Großblechen Abfall an.

Die Offenlegungsschrift WO 2020/011821 A1 beschreibt eine Materiallage für einen Rotor einer dynamoelektrischen rotatorischen Maschine mit einer Rotationsrichtung um eine in einem Lagenmittelpunkt der Materiallage angeordnete Rotationsachse, wobei die Materiallage eine im Wesentlichen am Lagenmittelpunkt angeordnete Materialaussparung aufweist, wobei die Materiallage einen ersten Bereich aufweist, wobei der erste Bereich ein erstes Material mit einer ersten Festigkeit aufweist, wobei die Materiallage einen im Wesentlichen ringförmigen, konzentrisch zum Lagenmittelpunkt angeordneten zweiten Bereich aufweist, wobei der zweite Bereich ein zweites Material mit einer gegenüber der ersten Festigkeit höheren zweiten Festigkeit aufweist, wobei das erste Material und das zweite Material stoffschlüssig verbunden sind. Die Erfindung betrifft ferner ein Materiallagengefüge sowie ein Verfahren zur Herstellung einer Materiallage.

Die Offenlegungsschrift EP 3 725 435 A1 beschreibt ein Herstellungsverfahren, bei dem ein erster Grünkörper aus einem ersten Material additiv gefertigt wird und der erste Grünkörper mittels eines ersten thermischen Prozesses thermisch vorbehandelt wird. Ein zweiter Grünkörper wird aus einem zweiten, von dem ersten Material verschiedenen, Material additiv gefertigt. Der thermisch vorbehandelte erste Grünkörper und der zweite Grünkörper werden gemeinsam mittels eines zweiten thermischen Prozesses behandelt, um den metallischen Gegenstand zu erhalten.

Die Offenlegungsschrift EP 3 595 148 A1 beschreibt ein Verfahren zur Herstellung einer Materiallage mit einer Lagendicke zwischen 0,5 und 500 µm mit den Schritten: Aufbringen einer Suspension, aufweisend wenigstens ein Bindemittel und Festteilchen, durch eine Schablone auf eine Grundfläche zum Erhalt eines Grünkörpers, Austreiben des Bindemittels aus dem Grünkörper, insbesondere mittels Entbinderung, Schaffen eines dauerhaften Zusammenhalts der Festteilchen durch Erwärmung und/oder mittels Verdichtung, insbesondere mittels Sinterung.

Das Drucken von zumindest einer Ausnehmung in der Materiallage erfordert eine komplex strukturierte Schablone, welche beispielsweise als Sieb ausgeführt ist. Derartige Schablonen sind teuer und aufwändig herzustellen.

Der Erfindung liegt somit die Aufgabe zugrunde, ein Verfahren zur Herstellung einer Materiallage mit zumindest einer Aussparung anzugeben, das, im Vergleich zum Stand der Technik, kostengünstiger ist.

Die Aufgabe wird erfindungsgemäß gelöst durch ein Verfahren zur Herstellung einer Materiallage mit zumindest einer Aussparung aus einem Grünkörper umfassend die Schritte: Aufbringen einer ersten Suspension, welche zumindest ein Bindemittel enthält, durch eine erste Ausnehmung einer ersten Schablone, Aufbringen einer zweiten Suspension, welche ein Bindemittel und Feststoffteilchen aus einem zweiten Werkstoff enthält, durch eine zweite Ausnehmung einer zweiten Schablone, wobei die erste Ausnehmung der ersten Schablone vollständig in der zweiten Ausnehmung der zweiten Schablone enthalten ist, sodass die zweite Suspension die erste Suspension in der Fläche vollständig umgibt, Sintern des die Suspensionen enthaltenden Grünkörpers, wobei durch den Sintervorgang die erste Suspension verflüchtigt wird und ein dauerhafter Zusammenhalt der Feststoffteilchen der zweiten Suspension geschaffen wird.

Darüber hinaus wird die Aufgabe erfindungsgemäß gelöst durch ein Verfahren zur Herstellung eines Materiallagengefüges für einen Rotor oder einen Stator einer elektrischen rotierenden Maschine umfassend ein Herstellen von Materiallagen, wobei zumindest eine der Materiallagen nach dem oben beschriebenen Verfahren hergestellt wird und wobei die Materiallagen übereinander angeordnet werden.

Die in Bezug auf das Verfahren zur Herstellung der Materiallage nachstehend angeführten Vorteile und bevorzugten Ausgestaltungen lassen sich sinngemäß auf das Verfahren zur Herstellung des Materiallagengefüges übertragen.

Der Erfindung liegt die Überlegung zugrunde, eine Materiallage mit zumindest einer Aussparung, welche beispielsweise in einem Blechpakte für eine elektrische rotierende Maschine verwendbar ist, durch ein verbessertes Siebdruckverfahren mit kostengünstigen und einfachen Schablonen herzustellen. Der Siebdruck erfolgt mit zumindest zwei Schablonen, welche jeweils eine Ausnehmung zum Aufbringen einer Suspension für die Materiallage aufweisen. Zunächst erfolgt ein Aufbringen einer ersten Suspension, welche zumindest ein Bindemittel enthält.

Die erste Suspension fungiert als Platzhaltermaterial und enthält beispielsweise, insbesondere organische, Binder-Polymere. Optional enthält die erste Suspension zusätzlich Feststoffteilchen aus einem ersten Werkstoff, der beispielsweise aus organischen Polymeren hergestellt ist, welche bei geringer Temperatur, z.B. 100°C bis 250°C, spaltbar und so verflüchtigbar sind. Alternativ ist der erste Werkstoff der ersten Suspension aus einem zumindest schlecht sinternden Werkstoff, beispielsweise Graphitpulver, Yttriumoxid, AlN, YAG oder Magnesiumoxid, hergestellt, wobei der zumindest schlecht sinternde Werkstoff durch ein Austreiben des Bindemittels verflüchtigbar ist, da kein dauerhafter Zusammenhalt der zumindest schlecht sinternden Feststoffteilchen ausbildbar ist. In einem weiteren Schritt erfolgt ein Aufbringen einer zweiten Suspension, welche ein Bindemittel und Feststoffteilchen aus einem zweiten Werkstoff enthält. Die aus dem zweiten Werkstoff hergestellten Feststoffteilchen der zweiten Suspension enthalten beispielsweise einen ferromagnetischen Werkstoff, insbesondere Eisen oder eine magnetische Eisenlegierung.

Die erste Suspension wird durch eine erste Ausnehmung der ersten Schablone aufgebracht, während die zweite Suspension durch eine zweite Ausnehmung der zweiten Schablone aufgebracht wird. Die erste Ausnehmung der ersten Schablone ist vollständig in der zweiten Ausnehmung der zweiten Schablone enthalten, sodass die zweite Suspension die erste Suspension vollständig umgibt. Dass die erste Ausnehmung der ersten Schablone vollständig in der zweiten Ausnehmung der zweiten Schablone enthalten ist, bedeutet, dass die erste Ausnehmung in der Fläche vollständig in der zweiten Ausnehmung liegt. Insbesondere weist die jeweilige Schablone pro zu druckender Materiallage eine einzige Ausnehmung auf. Auf einer Grundfläche können gleichzeitig mehrere, insbesondere identische, Materiallagen mit jeweils einer Schablone, welche jeweils mehrere, insbesondere identische, Ausnehmungen aufweist, gedruckt werden.

In einem weiteren Schritt erfolgt ein Sintern des die Suspensionen enthaltenden Grünkörpers, wobei durch den Sintervorgang die erste Suspension verflüchtigt wird und ein dauerhafter Zusammenhalt der Feststoffteilchen der zweiten Suspension geschaffen wird. Insbesondere beinhaltet das Sintern in diesem Zusammenhang ein Entbindern zum Austreiben des Bindemittels und ggf. weiterer flüchtiger Bestandteile der ersten Suspension und daraufhin den eigentlichen Sintervorgang. Das Entbindern findet beispielsweise bei einer Temperatur zwischen 300°C und 600°C statt, während der eigentliche Sintervorgang beispielsweise bei einer Temperatur von 700°C bis 1350°C erfolgt.

Durch ein derartiges Druckverfahren sind einfach herzustellende und daher kostengünstige Schablonen verwendbar. Durch Hinzufügen von weiteren Schablonen sind Materiallagen aus mehreren Werkstoffen einfach und kostengünstig herstellbar.

Eine weitere Ausführungsform sieht vor, dass der Grünkörper, insbesondere unmittelbar, nach dem Aufbringen der ersten Suspension und/oder nach dem Aufbringen der zweiten Suspension durch Wärmezufuhr getrocknet wird. Das Trocknen erfolgt beispielsweise durch eine Wärmelampe. Beispielsweise erfolgt zwischen einzelnen Druckschritten jeweils eine kurze, beispielsweise bis zu 60 s dauernde, Trocknung, während nach dem Aufbringen der Suspensionen ein längerer, beispielsweise bis zu 60 min dauernder, Trocknungsschritt erfolgt. Insbesondere durch derartige kurze Trocknungszeiten wird die frisch aufgebrachte Suspension fixiert und ein Verschmieren bei einem nachfolgenden Druckschritt vermieden, während durch den finalen längeren Trocknungsschritt beispielsweise ein möglicherweise verbliebenes Lösungsmittel ausgetrieben wird.

Eine weitere Ausführungsform sieht vor, dass die erste Schablone eine im Wesentlichen kreisförmige Ausnehmung aufweist, wobei beim Sintern durch Verflüchtigung der ersten Suspension eine im Wesentlichen kreisförmige Aussparung der Materiallage bereitgestellt wird. Eine derartige im Wesentlichen kreisförmige Ausnehmung ist beispielsweise geeignet, eine Welle aufzunehmen. Eine Herstellung der Ausnehmung durch eine sich verflüchtigende Suspension ermöglicht eine hohe Genauigkeit und damit eine exakte Passung, beispielsweise bei der Aufnahme einer Welle.

Eine weitere Ausführungsform sieht vor, dass die zweite Suspension durch die zweite Schablone dicker als die erste Suspension durch die erste Schablone aufgetragen wird. Insbesondere steigt eine Höhe der Schablonen sukzessive, beispielsweise im Bereich von 1 % bis 10 %, insbesondere im Bereich von 1 % bis 5 %, von Teildruck zu Teildruck an, um ein Abscheren eines bereits vorhandenen Druckbildes von der Grundfläche zu vermeiden.

Eine weitere Ausführungsform sieht vor, dass vor dem Sintern ein Teil der Suspensionen, insbesondere parallel zu einer ebenen Grundfläche, auf welcher der Grünkörper aufliegt, abgetragen wird. Beispielsweise wird ein oberer Bereich des Grünkörpers durch ein abtragendes Verfahren entfernt. Ein oberer Bereich beträgt beispielsweise bis zu 20 %, insbesondere bis zu 50 % der Gesamtstärke des Grünkörpers. Das abtragende Verfahren wird beispielsweise mittels Heißdrahtschneiden, welches auch Thermosägen genannt wird, Trockenschleifen, Vibrationsschneiden, welches auch Vibratomie genannt wird, oder Gefrierschneiden realisiert. Alternativ erfolgt das Abtragen mittels beheizten, abgestuften "Doctor Blades" oder mittels Anlösen und anschließendem Abstreifen. Durch das, insbesondere parallele, Abtragen ist eine sehr geringe Lagendicke erzielbar.

Eine weitere Ausführungsform sieht vor, dass der zweite Werkstoff einen magnetischen metallischen Werkstoff, insbesondere magnetisches Eisen oder eine magnetische Eisenlegierung, enthält. Erfahrungsgemäß haben sich derartige Werkstoffe, insbesondere zum Sintern, als besonders vorteilhaft erwiesen.

Eine weitere Ausführungsform sieht vor, dass das Verfahren folgende weitere Schritte umfasst: erneutes Aufbringen der ersten Suspension nach dem Aufbringen der zweiten Suspension durch eine dritte Ausnehmung einer dritten Schablone, wobei die zweite Ausnehmung der zweiten Schablone zumindest teilweise in der dritten Ausnehmung der dritten Schablone enthalten ist, sodass die mittels der dritten Schablone aufgetragene erste Suspension die mittels der zweiten Schablone aufgetragene zweite Suspension zumindest teilweise umgibt, erneutes Aufbringen der zweiten Suspension durch eine fünfte Ausnehmung einer fünften Schablone, wobei die dritte Ausnehmung der dritten Schablone zumindest teilweise in der fünften Ausnehmung der fünften Schablone enthalten ist, sodass die mittels der fünften Schablone aufgetragene zweite Suspension die mittels der dritten Schablone aufgetragene erste Suspension zumindest teilweise umgibt. Durch ein derartiges Druckverfahren sind einfach herzustellende und daher kostengünstige Schablonen verwendbar.

Eine weitere Ausführungsform sieht vor, dass die dritte Schablone derartig ausgeführt ist, dass durch Verflüchtigung der ersten Suspension konzentrisch um die Aussparung angeordnete weitere Aussparungen ausgebildet werden. In derartigen weiteren Aussparungen sind beispielsweise Permanentmagnete für einen Betrieb als Synchronmaschine oder Stäbe eines Kurzschlusskäfigs für einen Betrieb als Asynchronmaschine anordenbar. Durch ein derartiges Druckverfahren sind Materiallagen, beispielsweise für verschiedene Rotorarchitekturen, flexibel additiv herstellbar.

Eine weitere Ausführungsform sieht vor, dass das Verfahren folgende weitere Schritte umfasst: Aufbringen einer dritten Suspension, welche ein Bindemittel und Feststoffteilchen aus einem dritten Werkstoff enthält, nach dem erneuten Aufbringen der ersten Suspension durch eine vierte Ausnehmung einer vierten Schablone, wobei sich der dritte Werkstoff vom zweiten Werkstoff unterscheidet, wobei die vierte Ausnehmung der vierten Schablone zumindest teilweise in der dritten Ausnehmung der dritten Schablone enthalten ist, sodass die mittels der vierten Schablone aufgetragene dritte Suspension die mittels der dritten Schablone aufgetragene erste Suspension zumindest teilweise umgibt, Sintern des die Suspensionen enthaltenden Grünkörpers, wobei durch den Sintervorgang ein dauerhafter Zusammenhalt der Feststoffteilchen der zweiten Suspension und der dritten Suspension geschaffen wird und Bereiche mit Feststoffteilchen der zweiten Suspension und angrenzende Bereiche mit Feststoffteilchen der dritten Suspension stoffschlüssig verbunden werden. Beispielsweise sind der zweite und dritte Werkstoff als metallische Werkstoffe ausgeführt, welche sich hinsichtlich Ihrer elektrischen und/oder thermischen Leitfähigkeit und/oder hinsichtlich Ihrer magnetischen Eigenschaften unterscheiden. Durch eine derartige stoffschlüssige Verbindung wird eine hohe mechanische Stabilität innerhalb der Materiallage erreicht. Durch Hinzufügen der Schablonen sind Materiallagen aus mehreren Werkstoffen einfach und kostengünstig herstellbar.

Eine weitere Ausführungsform sieht vor, dass der dritte Werkstoff einen amagnetischen metallischen Werkstoff, insbesondere amagnetisches Eisen oder eine amagnetische Eisenlegierung, enthält. Beispielsweise enthält der dritte Werkstoff Austenit. Insbesondere wird der dritte Werkstoff in der Materiallage bei Verwendung in einem Rotorblechpaket angeordnet, um einen magnetischen Kurzschluss, beispielsweise zwischen in den weiteren Aussparungen angeordneten Permanentmagneten, zu verhindern. Eine Materiallage, welche aus mehreren verschiedenen Werkstoffen aufgebaut ist, ist mit einem derartigen Verfahren einfach und kostengünstig herstellbar.

Eine weitere Ausführungsform sieht vor, dass eine Materiallage mit einer Lagendicke zwischen 10 µm und 300 µm, insbesondere zwischen 10 µm und 100 µm, hergestellt wird. Bei einer derartigen Lagendicke wird, beispielsweise beim Einsatz in einer elektrischen rotierenden Maschine, eine ausreichende Wirbelstrom-Unterdrückung erreicht.

Eine weitere Ausführungsform sieht vor, dass wenigstens auf einer Lagenseite eine elektrisch isolierende Beschichtung aufgebracht wird. Eine derartige isolierende Beschichtung wird beispielsweise mittels Anodisierung, also mittels einer kontrollierten oxidativen Umwandlung, hergestellt, wobei durch die isolierende Beschichtung eine Stromführung von einer Materiallage auf eine andere Materiallage verhindert wird.

Eine weitere Ausführungsform sieht vor, dass wenigstens auf einer Lagenseite ein elektrisch isolierender Lack aufgebracht wird. Der Lack, insbesondere Backlack, weist gute Isolationseigenschaften auf und kann dünn aufgetragen werden, sodass ein hoher Stapelfaktor erreichbar ist.

Im Folgenden wird die Erfindung anhand der in den Figuren dargestellten Ausführungsbeispiele näher beschrieben und erläutert.

Es zeigen:
- FIG 1: eine schematische Querschnittsdarstellung einer elektrischen rotierenden Maschine,
- FIG 2: eine schematische Darstellung einer ersten Ausführung einer Materiallage,
- FIG 3: eine schematische Darstellung eines ersten Verfahrens zur Herstellung einer Materiallage,
- FIG 4: eine schematische Darstellung einer zweiten Ausführung einer Materiallage und
- FIG 5: eine schematische Darstellung eines zweiten Verfahrens zur Herstellung einer Materiallage.

Bei den im Folgenden erläuterten Ausführungsbeispielen handelt es sich um bevorzugte Ausführungsformen der Erfindung.

Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar.

Gleiche Bezugszeichen haben in den verschiedenen Figuren die gleiche Bedeutung.

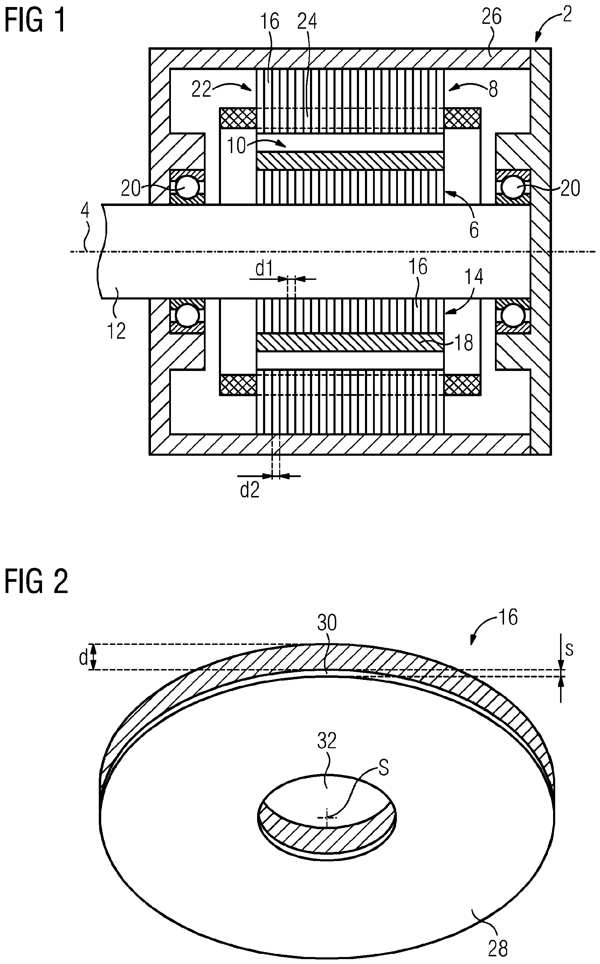

FIG 1 zeigt eine schematische Querschnittsdarstellung einer elektrischen rotierenden Maschine 2. Die elektrische rotierende Maschine 2, welche als Motor und/oder als Generator konfigurierbar ist, weist einen um eine Rotationsachse 4 rotierbaren Rotor 6 und einen Stator 8 auf, wobei der Stator 8 beispielhaft radial außerhalb des Rotors 6 angeordnet ist. Die Rotationsachse 4 definiert eine Axialrichtung, eine Radialrichtung und eine Umfangsrichtung. Zwischen dem Rotor 6 und dem Stator 8 ist ein Fluidspalt 10, der insbesondere als Luftspalt ausgeführt ist, ausgebildet.

Der Rotor 6 weist eine Welle 12 und ein Rotorblechpaket 14 auf, wobei das Rotorblechpaket 14 drehfest mit der Welle 12 verbunden ist. Das Rotorblechpaket 14 umfasst eine Vielzahl von gestapelten, gegeneinander elektrisch isolierten Materiallagen 16, die eine erste Lagendicke d1 im Bereich von 10 µm bis 300 µm, insbesondere 10 µm bis 100 µm, aufweisen und aus einem ferromagnetischen Werkstoff, beispielsweise aus Eisen oder einer Eisenlegierung, hergestellt sind. Darüber hinaus umfasst der Rotor 6 eine Mehrzahl von mit dem Rotorblechpaket 14 verbundenen Permanentmagneten 18 für einen Betrieb als Synchronmaschine. Der Rotor 6 kann, insbesondere anstelle der Permanentmagneten 18, einen Kurzschlusskäfig für einen Betrieb als Asynchronmaschine oder eine Erregerwicklung aufweisen. Die Welle 12 des Rotors 6 ist über Lager 20 drehbeweglich angeordnet.

Der Stator 8 umfasst ein Statorblechpaket 22, in dem eine Statorwicklung 24 aufgenommen ist. Das Statorblechpaket 22 umfasst eine Vielzahl von gestapelten, gegeneinander elektrisch isolierten Materiallagen 16, die eine zweite Lagendicke d2 im Bereich von 10 µm bis 300 µm, insbesondere 10 µm bis 100 µm, aufweisen und aus einem ferromagnetischen Material, beispielsweise aus Eisen oder einer Eisenlegierung, hergestellt sind. Der Rotor 6 und der Stator 8 sind in einem geschlossenen Gehäuse 26 untergebracht.

FIG 2 zeigt eine schematische Darstellung einer ersten Ausführung einer Materiallage 16, welche eine Lagendicke d im Bereich von 10 µm bis 300 µm, insbesondere 10 µm bis 100 µm, aufweist und durch Schablonendruck mit anschließendem Sintern hergestellt ist. Die Materiallage 16 in FIG 2 kann für ein Rotorblechpaket 14 oder ein Statorblechpaket 22 konfiguriert sein und ist aus einem ferromagnetischen Werkstoff, beispielsweise aus Eisen oder einer Eisenlegierung, mit einer elektrischen Leitfähigkeit von mindestens 8 MS/m hergestellt. Eine Lagenseite 28 der Materiallage 16 weist eine elektrisch isolierende Beschichtung 30 auf, welche dazu geeignet ist, gestapelte Materiallagen 16, beispielweise bei Verwendung in einem Blechpaket 14, 22 gegeneinander elektrisch zu isolieren. Die elektrisch isolierende Beschichtung 30 ist beispielsweise aus einem elektrisch isolierenden Lack, insbesondere Backlack, hergestellt. Darüber hinaus weist die elektrisch isolierende Beschichtung 30 eine Schichtdicke s von maximal 1 µm auf. Ferner weist die Materiallage 16 in einem Schwerpunkt S eine im Wesentlichen kreisförmige Aussparung 32 auf, welche beispielsweise zur Aufnahme einer Welle 12 geeignet ist. Insbesondere ist die Materiallage 16 rotationssymmetrisch bezüglich des Schwerpunkts S ausgebildet. Optional umfasst die Materiallage 16 Mittel zur formschlüssigen Verbindung einer derartigen Welle 12, welche beispielsweise als Nut zur Aufnahme einer Passfeder ausgeführt sind.

Die weitere Ausführung der Materiallage 16 in FIG 2 entspricht der in FIG 1.

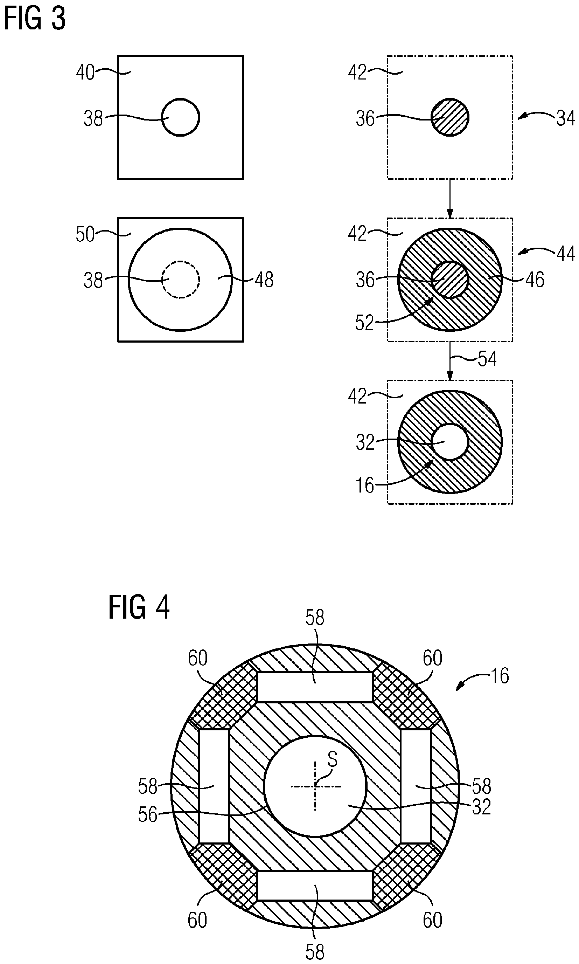

FIG 3 zeigt eine schematische Darstellung eines ersten Verfahrens zur Herstellung einer Materiallage 16 mit einer im Wesentlichen kreisförmigen Aussparung 32. Exemplarisch wird die erste Ausführung einer Materiallage 16 aus FIG 2 hergestellt. Das Herstellungsverfahren beinhaltet das Aufbringen 34 einer ersten Suspension 36, welche zumindest ein Bindemittel enthält, durch eine kreisförmige erste Ausnehmung 38 einer ersten Schablone 40 auf einer ebenen Grundfläche 42. Nach dem Aufbringen 34 der ersten Suspension 36 erfolgt eine kurze, beispielsweise bis zu 60 s dauernde, Trocknung, um die erste Suspension 36 zu fixieren und damit ein Verschmieren bei den folgenden Schritten zu verhindern. Die Trocknung erfolgt beispielsweise durch Wärmezufuhr, insbesondere durch eine Wärmelampe.

Das Herstellungsverfahren beinhaltet nach dem Aufbringen 34 der ersten Suspension 36 und der kurzen Trocknung der ersten Suspension 36 das Aufbringen 44 einer zweiten Suspension 46, welche ein Bindemittel und Feststoffteilchen aus einem zweiten Werkstoff enthält. Das Aufbringen 44 der zweiten Suspension 46 erfolgt durch eine, beispielsweise kreisförmige, zweite Ausnehmung 48 einer zweiten Schablone 50, wobei die erste Ausnehmung 38 der ersten Schablone 40 vollständig in der zweiten Ausnehmung 48 der zweiten Schablone 50 enthalten ist, sodass die zweite Suspension 46 die erste Suspension 36 vollständig umgibt.

Die ersten Suspension 36 fungiert als Platzhaltermaterial und enthält beispielsweise, insbesondere organische, Binder-Polymere. Optional enthält die erste Suspension zusätzlich Feststoffteilchen aus einem ersten Werkstoff, der beispielsweise aus organischen Polymeren hergestellt ist. Derartige Polymere sind durch thermische Behandlung, insbesondere bei geringer Temperatur, z.B. 100°C bis 250°C, spaltbar und somit vollständig entfernbar. Alternativ ist der erste Werkstoff der ersten Suspension 36 als ein zumindest schlecht sinternder Werkstoff, beispielsweise Graphitpulver, Yttriumoxid, AlN, YAG oder Magnesiumoxid, ausgeführt, wobei der zumindest schlecht sinternde Werkstoff durch ein Austreiben des Bindemittels verflüchtigbar ist, da kein dauerhafter Zusammenhalt der zumindest schlecht sinternden Feststoffteilchen ausbildbar ist. Die aus dem zweiten Werkstoff hergestellten Feststoffteilchen der zweiten Suspension 46 enthalten beispielsweise einen ferromagnetischen Werkstoff, insbesondere Eisen oder eine magnetische Eisenlegierung. Nach dem Aufbringen 44 der zweiten Suspension 46 erfolgt ein längerer, beispielsweise bis zu 60 min dauernder, Trocknungsschritt, um verbliebene Lösungsmittel auszutreiben, die Suspensionen 36, 46 zu fixieren und einen Grünkörper 52 zu erhalten.

In einem weiteren Schritt erfolgt ein Sintern 54 des die Suspensionen 36, 46 enthaltenden Grünkörpers 52 zum Erhalt der Materiallage 16 mit der im Wesentlichen kreisförmigen Aussparung 32, wobei durch den Sintervorgang die erste Suspension 36 verflüchtigt wird und ein dauerhafter Zusammenhalt der Feststoffteilchen der zweiten Suspension 46 geschaffen wird. Insbesondere beinhaltet das Sintern in diesem Zusammenhang ein Entbindern zum Austreiben des Bindemittels und ggf. weiterer flüchtiger Bestandteile, z.B. der ersten Suspension 36, und daraufhin den eigentlichen Sintervorgang. Das Entbindern findet beispielsweise bei einer Temperatur zwischen 300°C und 600°C statt, während der eigentliche Sintervorgang beispielsweise bei einer Temperatur von 700°C bis 1350°C erfolgt. Das Entbindern findet beispielsweise bei einer Temperatur zwischen 300°C und 600°C statt, während der eigentliche Sintervorgang beispielsweise bei einer Temperatur von 700°C bis 1350°C erfolgt.

Insbesondere wird die zweite Suspension 46 durch die zweite Schablone 50 dicker als die erste Suspension 36 durch die erste Schablone 40 aufgetragen, wobei die zweite Schablone 50 höher als die erste Schablone 40 ausgeführt ist. Beispielsweise ist die zweite Schablone 50 im Bereich von 1 % bis 10 %, insbesondere im Bereich von 1 % bis 5 % höher als die erste Schablone 40, um ein Abscheren der ersten Suspension 36 von der ebenen Grundfläche 42 zu vermeiden. Beispielsweise wird vor dem Sintern 54 ein Teil der Suspensionen 36, 46, insbesondere parallel zur ebenen Grundfläche 42, auf welcher der Grünkörper 52 aufliegt, abgetragen. Insbesondere wird ein oberer Bereich des Grünkörpers 52 durch ein abtragendes Verfahren entfernt. Der obere Bereich beträgt beispielsweise bis zu 20 %, insbesondere bis zu 50 % der Gesamtstärke des Grünkörpers 52. Das abtragende Verfahren wird beispielsweise mittels Heißdrahtschneiden, welches auch Thermosägen genannt wird, Trockenschleifen, Vibrationsschneiden, welches auch Vibratomie genannt wird, oder Gefrierschneiden realisiert. Alternativ erfolgt das Abtragen des weichen elastomerartigen Grünkörpers 52 mittels beheizten, abgestuften "Doctor Blades" oder mittels Anlösen und anschließendem Abstreifen.

Auf der Grundfläche 42 können gleichzeitig mehrere, insbesondere identische, Materiallagen 16 mit jeweils einer Schablone 40, 50, welche jeweils mehrere, insbesondere identische, Ausnehmungen 38, 48 aufweist, gedruckt werden. Eine derartige Anordnung mit gleichzeitig gedruckten, insbesondere identischen, Materiallagen 16 wird Drucknutzen genannt. Insbesondere weist jede Schablone 40, 50 pro Materiallagen 16 eine einzige Ausnehmung 38, 48 mit einer umlaufenden Kontur auf.

FIG 4 zeigt eine schematische Darstellung einer zweiten Ausführung einer Materiallage 16, welche eine im Wesentlichen kreisförmige Aussparung 32 aufweist, wobei eine Außenkontur 56 der im Wesentlichen kreisförmige Aussparung 32 äquidistant um den Schwerpunkt S der Materiallage 16 verlaufend angeordnet ist. Die Materiallage 16 ist für ein Rotorblechpaket 14 konfiguriert und aus metallischen, insbesondere eisenbasierten, Werkstoffen hergestellt. Ferner sind beispielhaft vier weitere Aussparungen 58 konzentrisch um die Aussparung 32 angeordnet, wobei die weiteren Aussparungen 58 beispielsweise zur Aufnahme von Permanentmagneten konfiguriert sind. Zwischen den weiteren Aussparungen 58 sind beispielhaft vier amagnetische Bereiche 60, ebenfalls konzentrisch um die Aussparung 32, angeordnet. Die amagnetischen Bereiche 60 trennen die weiteren Aussparungen 58 voneinander, um einen magnetischen Kurzschluss zwischen in den weiteren Aussparungen 58 angeordneten Permanentmagneten zu verhindern. Die amagnetischen Bereiche 60 der Materiallage 16 sind aus einem amagnetischen metallischen Werkstoff, insbesondere aus einer amagnetischen Eisenlegierung, beispielsweise Austenit, hergestellt. Die weitere Ausführung der Materiallage 16 in FIG 4 entspricht der in FIG 2.

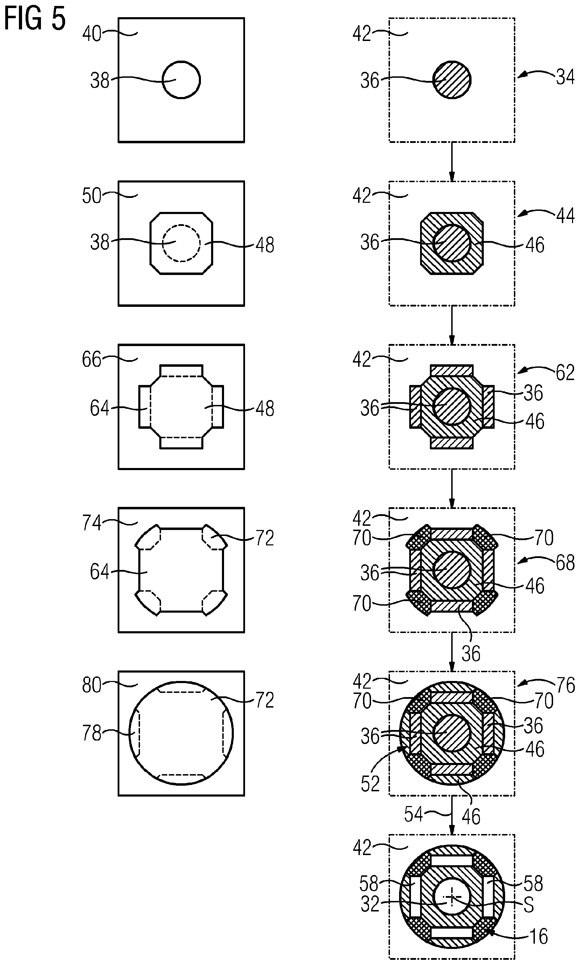

FIG 5 zeigt eine schematische Darstellung eines zweiten Verfahrens zur Herstellung einer Materiallage 16. Exemplarisch wird die zweite Ausführung einer Materiallage 16 aus FIG 4 hergestellt. Das Aufbringen 34 der ersten Suspension 36 sowie das Aufbringen 44 der zweiten Suspension 46 erfolgt analog zum Herstellungsverfahren in FIG 3. Das Herstellungsverfahren in FIG 5 beinhaltet nach dem Aufbringen 44 der zweiten Suspension 46 und einer anschließenden kurzen, beispielsweise bis zu 60 s dauernden, Trocknung, ein erneutes Aufbringen 62 der ersten Suspension 36. Das erneute Aufbringen 62 der ersten Suspension 36 erfolgt durch eine dritte Ausnehmung 64 einer dritten Schablone 66, wobei die zweite Ausnehmung 48 der zweiten Schablone 50 teilweise in der dritten Ausnehmung 64 der dritten Schablone 66 enthalten ist, sodass die mittels der dritten Schablone 66 aufgetragene erste Suspension 36 die mittels der zweiten Schablone 50 aufgetragene zweite Suspension 46 teilweise umgibt. Die dritte Schablone 66 ist derartig ausgeführt, dass durch Verflüchtigung der Feststoffteilchen aus dem ersten Werkstoff der ersten Suspension 36 konzentrisch um die Aussparung 32 angeordnete weitere Aussparungen 58 ausgebildet werden, welche beispielsweise zur Aufnahme von Permanentmagneten vorgesehen sind.

Das Herstellungsverfahren in FIG 5 beinhaltet nach dem erneuten Aufbringen 62 der ersten Suspension 36 und einer anschließenden kurzen, beispielsweise bis zu 60 s dauernden, Trocknung, ein Aufbringen 68 einer dritten Suspension 70, welche ein Bindemittel und Feststoffteilchen aus einem dritten Werkstoff enthält. Das Aufbringen 68 der dritten Suspension 70 erfolgt durch eine vierte Ausnehmung 72 einer vierten Schablone 74, wobei sich der dritte Werkstoff vom zweiten Werkstoff unterscheidet. Insbesondere ist der dritte Werkstoff ein amagnetischer metallischer Werkstoff, insbesondere eine amagnetische Eisenlegierung, beispielsweise Austenit. Die vierte Ausnehmung 72 der vierten Schablone 74 ist teilweise in der dritten Ausnehmung 64 der dritten Schablone 66 enthalten, sodass die mittels der vierten Schablone 74 aufgetragene dritte Suspension 70 die mittels der dritten Schablone 66 aufgetragene erste Suspension 36 teilweise umgibt. Insbesondere ist die mittels der vierten Schablone 74 aufgetragene dritte Suspension 70 mit der mittels der dritten Schablone 66 aufgetragenen ersten Suspension 36 und mittels der zweiten Schablone 48 aufgetragenen zweiten Suspension 46 in Kontakt.

Darüber hinaus beinhaltet das Herstellungsverfahren in FIG 5 nach dem Aufbringen 68 der dritten Suspension 70 und einer anschließenden kurzen, beispielsweise bis zu 60 s dauernden, Trocknung, ein erneutes Aufbringen 76 der zweiten Suspension 46 durch eine fünfte Ausnehmung 78 einer fünften Schablone 80. Die vierte Ausnehmung 72 der vierten Schablone 74 ist teilweise in der fünften Ausnehmung 78 der fünften Schablone 80 enthalten, sodass die mittels der fünften Schablone 80 aufgetragene zweite Suspension 46 die mittels der vierten Schablone 74 aufgetragene dritte Suspension 70 teilweise umgibt. Insbesondere ist die mittels der fünften Schablone 80 aufgetragene zweite Suspension 46 mit der mittels der vierten Schablone 74 aufgetragenen dritten Suspension 70 und mit der mittels der dritten Schablone 66 aufgetragenen ersten Suspension 36 in Kontakt. Nach dem erneuten Aufbringen 76 der zweiten Suspension 46 mittels der fünften Schablone 80 erfolgt ein längerer, beispielsweise bis zu 60 min dauernder, Trocknungsschritt, um verbliebene Lösungsmittel auszutreiben, die Suspensionen 36, 46, 70 zu fixieren und einen Grünkörper 52 zu erhalten.

Daraufhin erfolgt ein Sintern 54 des die Suspensionen 36, 46, 70 enthaltenden Grünkörpers 52 zum Erhalt der in FIG 4 beschriebenen Materiallage 16, wobei durch den Sintervorgang die erste Suspension 36 verflüchtigt wird und ein dauerhafter Zusammenhalt der Feststoffteilchen der zweiten Suspension 46 und der dritten Suspension 70 geschaffen wird. Ferner werden durch den Sintervorgang Bereiche mit Feststoffteilchen der zweiten Suspension 46 und angrenzende Bereiche mit Feststoffteilchen der dritten Suspension 70 stoffschlüssig verbunden. Die weitere Ausführung des Herstellungsverfahrens in FIG 5 entspricht dem in FIG 3.

Alternativ wird mittels des in FIG 5 beschriebenen Fertigungsverfahrens eine Materiallage 16 hergestellt, deren weitere Aussparungen 58 zur Aufnahme von Stäben eines Käfigläufers konfiguriert sind. Bei der Herstellung einer derartigen Materiallage 16 für einen Käfigläufer kann das Aufbringen 68 der dritten Suspension 70 entfallen, wobei das erneute Aufbringen 76 der zweiten Suspension 46 nach dem erneuten Aufbringen 62 der ersten Suspension 36 folgt.

Zusammenfassend betrifft die Erfindung ein Verfahren zur Herstellung einer Materiallage 16 mit zumindest einer Aussparung 32 aus einem Grünkörper 52. Um, im Vergleich zum Stand der Technik, eine bessere Kostenposition zu erreichen, wird vorgeschlagen, dass das Herstellungsverfahren folgende Schritte umfasst: Aufbringen 34 einer ersten Suspension 36, welche zumindest ein Bindemittel enthält, durch eine erste Ausnehmung 38 einer ersten Schablone 40, Aufbringen 44 einer zweiten Suspension 46, welche ein Bindemittel und Feststoffteilchen aus einem zweiten Werkstoff enthält, durch eine zweite Ausnehmung 48 einer zweiten Schablone 50, wobei die erste Ausnehmung 38 der ersten Schablone 40 vollständig in der zweiten Ausnehmung 48 der zweiten Schablone 50 enthalten ist, sodass die zweite Suspension 46 die erste Suspension 36 vollständig umgibt, Sintern 54 des die Suspensionen 36, 46 enthaltenden Grünkörpers 52, wobei durch den Sintervorgang die erste Suspension 36 verflüchtigt wird und ein dauerhafter Zusammenhalt der Feststoffteilchen der zweiten Suspension 46 geschaffen wird.

## Patentansprüche

1. Verfahren zur Herstellung einer Materiallage (16) mit zumindest einer Aussparung (32) aus einem Grünkörper (52) umfassend folgende Schritte:
- Aufbringen (34) einer ersten Suspension (36), welche zumindest ein Bindemittel enthält, durch eine erste Ausnehmung (38) einer ersten Schablone (40),
- Aufbringen (44) einer zweiten Suspension (46), welche ein Bindemittel und Feststoffteilchen aus einem zweiten Werkstoff enthält, durch eine zweite Ausnehmung (48) einer zweiten Schablone (50),
wobei die erste Ausnehmung (38) der ersten Schablone (40) vollständig in der zweiten Ausnehmung (48) der zweiten Schablone (50) enthalten ist, sodass die zweite Suspension (46) die erste Suspension (36) vollständig umgibt,
- Sintern (54) des die Suspensionen (36, 46) enthaltenden Grünkörpers (52),
wobei durch den Sintervorgang die erste Suspension (36) verflüchtigt wird und ein dauerhafter Zusammenhalt der Feststoffteilchen der zweiten Suspension (46) geschaffen wird.

2. Verfahren nach Anspruch 1,
wobei der Grünkörper (52), insbesondere unmittelbar, nach dem Aufbringen (34) der ersten Suspension (36) und/oder nach dem Aufbringen (44) der der zweiten Suspension (46) durch Wärmezufuhr getrocknet wird.

3. Verfahren nach einem der Ansprüche 1 oder 2,
wobei die erste Schablone (40) eine im Wesentlichen kreisförmige Ausnehmung (38) aufweist,
wobei beim Sintern (54) durch Verflüchtigung der ersten Suspension (36) eine im Wesentlichen kreisförmige Aussparung (32) der Materiallage (16) bereitgestellt wird.

4. Verfahren nach einem der vorherigen Ansprüche,
wobei die zweite Suspension (46) durch die zweite Schablone (50) dicker als die erste Suspension (36) durch die erste Schablone (40) aufgetragen wird.

5. Verfahren nach einem der vorherigen Ansprüche,
wobei vor dem Sintern ein Teil der Suspensionen (36, 46), insbesondere parallel zu einer ebenen Grundfläche (42), auf welcher der Grünkörper (52) aufliegt, abgetragen wird.

6. Verfahren nach einem der vorherigen Ansprüche,
wobei der zweite Werkstoff einen magnetischen metallischen Werkstoff, insbesondere magnetisches Eisen oder eine magnetische Eisenlegierung, enthält.

7. Verfahren nach einem der vorherigen Ansprüche,
umfassend folgende weitere Schritte:
- erneutes Aufbringen (62) der ersten Suspension (36) nach dem Aufbringen (44) der zweiten Suspension (46) durch eine dritte Ausnehmung (64) einer dritten Schablone (66), wobei die zweite Ausnehmung (48) der zweiten Schablone (50) zumindest teilweise in der dritten Ausnehmung (64) der dritten Schablone (66) enthalten ist, sodass die mittels der dritten Schablone (66) aufgetragene erste Suspension (36) die mittels der zweiten Schablone (50) aufgetragene zweite Suspension (46) zumindest teilweise umgibt,
- erneutes Aufbringen (76) der zweiten Suspension (46) durch eine fünfte Ausnehmung (78) einer fünften Schablone (80), wobei die dritte Ausnehmung (64) der dritten Schablone (66) zumindest teilweise in der fünften Ausnehmung (78) der fünften Schablone (80) enthalten ist, sodass die mittels der fünften Schablone (80) aufgetragene zweite Suspension (46) die mittels der dritten Schablone (66) aufgetragene erste Suspension (36) zumindest teilweise umgibt.

8. Verfahren nach Anspruch 7,
wobei die dritte Schablone (66) derartig ausgeführt ist, dass durch Verflüchtigung der ersten Suspension (36) konzentrisch um die Aussparung (32) angeordnete weitere Aussparungen (58) ausgebildet werden.

9. Verfahren nach einem der Ansprüche 7 oder 8,
umfassend folgende weitere Schritte:
- Aufbringen einer dritten Suspension (70), welche ein Bindemittel und Feststoffteilchen aus einem dritten Werkstoff enthält, nach dem erneuten Aufbringen (62) der ersten Suspension (36) durch eine vierte Ausnehmung (72) einer vierten Schablone (74),
wobei sich der dritte Werkstoff vom zweiten Werkstoff unterscheidet,
wobei die vierte Ausnehmung (72) der vierten Schablone (74) zumindest teilweise in der dritten Ausnehmung (64) der dritten Schablone (66) enthalten ist, sodass die mittels der vierten Schablone (74) aufgetragene dritte Suspension (70) die mittels der dritten Schablone (66) aufgetragene erste Suspension (36) zumindest teilweise umgibt,
- Sintern (54) des die Suspensionen (36, 46, 70) enthaltenden Grünkörpers (52),
wobei durch den Sintervorgang ein dauerhafter Zusammenhalt der Feststoffteilchen der zweiten Suspension (46) und der dritten Suspension (70) geschaffen wird und Bereiche mit Feststoffteilchen der zweiten Suspension (46) und angrenzende Bereiche mit Feststoffteilchen der dritten Suspension (70) stoffschlüssig verbunden werden.

10. Verfahren nach einem der vorherigen Ansprüche,
wobei der dritte Werkstoff einen amagnetischen metallischen Werkstoff, insbesondere amagnetisches Eisen oder eine amagnetische Eisenlegierung, enthält.

11. Verfahren nach einem der vorherigen Ansprüche,
wobei eine Materiallage (16) mit einer Lagendicke (d) zwischen 10 µm und 300 µm, insbesondere zwischen 10 µm und 100 µm, hergestellt wird.

12. Verfahren nach einem der vorherigen Ansprüche,
wobei wenigstens auf einer Lagenseite (28) eine elektrisch isolierende Beschichtung (30) aufgebracht wird.

13. Verfahren nach einem der vorherigen Ansprüche,
wobei wenigstens auf einer Lagenseite (28) ein elektrisch isolierender Lack aufgebracht wird.

14. Verfahren zur Herstellung eines Materiallagengefüges für einen Rotor (6) oder einen Stator (8) einer elektrischen rotierende Maschine (2) umfassend ein Herstellen von Materiallagen (16),
wobei zumindest eine der Materiallagen (16) nach einem der vorherigen Ansprüche hergestellt wird und
wobei die Materiallagen (16) übereinander angeordnet werden.
